# EUROPÄISCHE PATENTSCHRIFT

(11) **EP 3 379 700 B1**
(45) Veröffentlichungstag und Bekanntmachung des Hinweises auf die Patenterteilung: **29.04.2020**
(21) Anmeldenummer: 17161982.8
(22) Anmeldetag: 21.03.2017
(51) Int. Cl.: H02K 5/04, H02K 15/14, B21D 19/04, B21D 22/14

(54) **GEHÄUSE UND VERFAHREN ZUM HERSTELLEN EINES GEHÄUSES**
HOUSING AND METHOD FOR PRODUCING SAME
BOÎTIER ET SON PROCÉDÉ DE FABRICATION

(43) Veröffentlichungstag der Anmeldung: 26.09.2018
(73) Patentinhaber: Fischer & Kaufmann GmbH & Co. KG, 57413 Finnentrop (DE)
(72) Erfinder: BISCHOPINK, Hugo, 57413 Finnentrop (DE); BISCHOPINK, Jürgen, 57462 Olpe (DE); HEUTGER, Tobias, 59846 Sundern (DE); BEHRENDT, Carsten, 57413 Finnentrop (DE)
(74) Vertreter: Wunderlich & Heim Patentanwälte Partnerschaftsgesellschaft mbB

(56) Entgegenhaltungen:
- WO-A2-2011/133320
- CN-U- 202 206 233
- DE-A1-102007 038 784
- DE-A1-102008 026 992
- DE-A1-102012 008 015
- US-A1- 2003 076 002
- US-A1- 2008 284 265
- US-A1- 2009 205 393

## Beschreibung

Die Erfindung betrifft ein Verfahren zum Herstellen eines Gehäuses für einen Elektroantrieb, mit einer trommelförmigen Umfangswand und einem radial verlaufenden Boden, wobei im Bereich des Bodens radial nach außen vorstehende Befestigungslaschen angeordnet sind, gemäß dem Oberbegriff des Anspruchs 1.

Die Erfindung betrifft ein Gehäuse für einen Elektroantrieb, mit einer trommelförmigen Umfangswand und einem radial verlaufenden Boden, wobei im Bereich des Bodens radial nach außen vorstehende Befestigungslaschen angeordnet sind, gemäß dem Oberbegriff des Anspruchs 6.

Derartige topfförmige Gehäuse sind zum Aufnehmen eines Stators und eines Läufers für einen Elektroantrieb bekannt. Das Gehäuse dient dabei zum einen dem Schutz der inneren Bestandteile des Elektroantriebes und zum anderen der Befestigung des Elektroantriebes an einem Grundträger oder einem sonstigen Bauteil. Zu diesem Zweck sind an dem Gehäuse radial nach außen vorstehende Befestigungslaschen angeordnet, mit denen das Gehäuse etwa durch Schrauben oder in sonstiger Weise befestigt werden kann. Ein solches Gehäuse geht etwa aus der US 2008/0284265 A1 hervor.

Es ist grundsätzlich bekannt, derartige Gehäuse als ein Guss- oder Druckgussbauteil auszubilden. Ein Herstellen durch Gießen ist jedoch aufgrund des notwendigen Energieaufwandes zum Schmelzen des Metalls und der zwingenden spanabhebenden Nachbearbeitung und Gussteilreinigung aufwändig. Ein weiteres Problem bei Gussteilen besteht darin, dass diese aufgrund des Materialgefüges eine begrenzte Festigkeit, insbesondere bei schwingender Belastung aufweisen und so mit entsprechenden Materialdicken zu dimensionieren sind. Dies führt zu einem erhöhten Gewicht, was insbesondere bei Antrieben von Kraftfahrzeugen als nachteilig empfunden wird. Bei stark schwingender Belastung über längere Zeiträume besteht die Gefahr, dass die relativ kleinen Befestigungslaschen abreißen. Aus der WO 2011/133320 geht ein aus Kunststoff geformtes Gehäuse eines Elektromotors hervor.

Es ist weiterhin etwa aus der US 2009/0205393 A1 bekannt, Gehäuse als Schmiedeteil oder als Schweißteil herzustellen. Auch diese Fertigungsarten bedingen aufgrund eines unvermeidbaren Wärmeverzugs häufig eine Nachbearbeitung und sind daher ebenfalls relativ kostenaufwändig.

Die CN 202 206 233 U1 zeigt ein geschweißtes topfförmiges Gehäuse.

DE102008026992 offenbart ein Verfahren zum Herstellen eines Gehäuses für einen Elektroantrieb wobei ein rohrförmiges Werkstück an einer Drückwalzmaschine eingespannt und in Rotation versetzt wird, und das rohrförmige Werkstück durch Zustellen und axiales Überlaufen einer Umformrolle zumindest bereichsweise in der Wanddicke reduziert und dabei axial gelängt wird.

Der Erfindung liegt die **Aufgabe** zugrunde, ein Gehäuse für einen Elektromotor und ein Verfahren zu dessen Herstellung anzugeben, welches bei einer hohen Festigkeit effizient und kostengünstig herstellbar ist.

Die Aufgabe wird nach der Erfindung durch ein Gehäuse mit den Merkmalen des Anspruchs 6 und ein Verfahren zum Herstellen eines Gehäuses mit den Merkmalen des Anspruchs 1 gelöst. Bevorzugte Ausführungsformen der Erfindung sind in den jeweils abhängigen Ansprüchen angegeben.

Das erfindungsgemäße Gehäuse ist dadurch gekennzeichnet, dass die trommelförmige Umfangswand und die radial nach außen vorstehenden Befestigungslaschen einstückig aus einem rohrförmigen Werkstück gebildet sind, wobei die Befestigungslaschen spanlos durch Materialverdrängung aus dem Material des rohrförmigen Werkstücks geformt sind.

Ein Grundgedanke der Erfindung kann darin gesehen werden, das Gehäuse zumindest weitgehend durch spanloses Umformen aus einem rohrförmigen Ausgangswerkstück herzustellen. Dabei wird das Ausgangswerkstück vorzugsweise auf einer Drückwalzmaschine eingespannt und durch Zustellen einer oder mehrere Umformrollen spanlos umgeformt. Dabei werden die Umformrollen vorzugsweise axial an einem Endbereich des Werkstücks zugestellt, wobei Material des rohrförmigen Werkstücks radial nach außen verdrängt wird. Aus diesem radial nach außen verdrängten Material werden die Befestigungslaschen an dem rohrförmigen Werkstück ausgebildet, welches die trommelförmige Umfangswand des Gehäuses bildet.

Ein spanloses Umformen führt zu einer Gefügeverfestigung. Hierdurch wird insbesondere eine sehr stabile Verbindung zwischen der Umfangswand und den Befestigungslaschen erreicht. Aufgrund eines Entfallens eines Aufschmelzens ist die Herstellung energie-, arbeits- und kosteneffizient.

Eine bevorzugte Ausführungsform der Erfindung besteht dabei darin, dass der Boden an der trommelförmigen Umfangswand angebracht, insbesondere angeschweißt ist. Vorzugsweise kann bei dem spanlosen Umformen des rohrförmigen Werkstücks an dem Endbereich ein ringförmiger Absatz ausgebildet werden, an welchem der scheiben- oder ringförmige Boden aufgesetzt und in dieser Position mit der Umfangswand verbunden wird. Ein Verbinden kann durch geeignete Verbindungsarten erfolgen, etwa durch ein Verprägen, Verpressen und/oder Verkleben. Besonders bevorzugt ist ein Verschweißen, da hierdurch eine besonders stabile und zuverlässige Verbindung hergestellt wird.

Neben dieser zweiteiligen Ausführung des Gehäuses besteht eine erfindungsgemäße Ausführungsvariante darin, dass der Boden durch Materialverdrängung aus dem Material des rohrförmigen Werkstücks angeformt ist. Bei dem Umformen, insbesondere durch ein axiales Drückwalzen, kann so Material sowohl radial nach außen als auch radial nach innen verdrängt werden. Das radial nach innen verdrängte Material kann in einem oder mehreren weiteren Umformschritten zu dem gewünschten Boden umgeformt werden.

Insbesondere zum Ausbilden eines Gehäuses für einen Elektroantrieb ist es nach einer Weiterbildung der Erfindung vorteilhaft, dass der Boden ringförmig mit einer Mittenöffnung ausgebildet ist. Die Mittenöffnung kann dabei zum Durchgang einer Antriebswelle, insbesondere eines Läufers, ausgebildet sein.

Grundsätzlich können die Befestigungslaschen als Stift- oder Plattenelemente in beliebiger Form ausgebildet sein. Besonders vorteilhaft ist es nach einer Weiterbildung der Erfindung, dass die Befestigungslaschen jeweils mit mindestens einer Durchgangsöffnung für Befestigungsmittel versehen sind. Die Durchgangsöffnungen sind insbesondere durch Bohren oder Stanzen eingebracht und dienen zum Durchgang etwa von Befestigungsschrauben. Neben den Befestigungslaschen können durch das verdrängte Material auch andere radial und/oder axial vorstehende Elemente, wie Anschläge, Stifte, Nasen, Zähne etc. ausgebildet werden.

Eine besonders feste und gewichtsreduzierte Variante des Gehäuses wird nach einer weiteren Ausführungsform der Erfindung dadurch erzielt, dass die trommelförmige Umfangswand aus dem rohrförmigen Werkstück durch Abstreckdrückwalzen geformt ist, wobei das Material der Umfangswand kalt verfestigt ist. So kann das Ausgangswerkstück beispielsweise aus einem relativ günstigen Stahlmaterial mit einer gängigen Festigkeit gebildet sein. Durch ein Abstreckdrückwalzen, bei welchem eine Länge des Ausgangswerkstücks zu der Endform der trommelförmigen Umfangswand gelängt und dabei in der Wanddicke reduziert wird, erfolgt gleichzeitig eine gezielte Kaltverfestigung des Ausgangsmaterials. Dies erhöht die Festigkeit, was eine weitere Gewichtsreduzierung erlaubt.

Die Erfindung umfasst grundsätzlich auch einen Elektroantrieb mit einem Gehäuse, in welchem ein Stator angeordnet und ein Läufer drehbar gelagert sind. Dabei ist die Erfindung dadurch gekennzeichnet, dass ein Gehäuse vorgesehen ist, wie es zuvor beschrieben wurde.

Das erfindungsgemäße Verfahren ist unter anderem dadurch gekennzeichnet, dass ein rohrförmiges Werkstück an einer Drückwalzmaschine eingespannt und in Rotation versetzt wird, dass an einem Endbereich des rohrförmigen Werkstücks mindestens eine Umformrolle axial zugestellt wird, wobei Material radial nach außen verdrängt wird, und dass aus dem verdrängten Material die Befestigungslaschen gebildet werden.

Das Verfahren ist insbesondere zur Herstellung eines Gehäuses einsetzbar, wie es zuvor beschrieben wurde. Es werden die dabei erzielten Vorteile erreicht.

Nach dem erfindungsgemäßen Verfahren ist vorgesehen, dass das rohrförmige Werkstück durch Zustellen und axiales Überlaufen einer Umformrolle zumindest bereichsweise in der Wanddicke reduziert und dabei axial gelängt wird. Das Ausgangswerkstück aus einem Umformstahl hat somit eine kleinere Länge als die zu formende trommelförmige Umfangswand. Gleichzeitig ist die Wanddicke des Ausgangswerkstücks größer als zumindest Teilbereiche der umzuformenden Umfangswand. Ein wesentlicher Vorteil bei einem axialen Abstreckdrückwalzen des Ausgangswerkstücks besteht darin, dass mit der Verringerung der Wanddicke gleichzeitig eine Kaltverfestigung des Materialgefüges erfolgt. Hierdurch lässt sich eine erhöhte Festigkeit bei einem gleichzeitig verringerten Gewicht erzielen. Zudem ergibt sich bei einem Drückwalzen auch eine exakte Rotationssymmetrie des Werkstücks bei einer verfestigten und besonders glatten Oberfläche.

Nach dem erfindungsgemäßen Verfahren ist es vorteilhaft, dass ein Endbereich, an welchem die Befestigungslaschen ausgebildet werden, in seiner Wanddicke unverändert bleibt oder die Wanddicke durch Anstauchen zusätzlich verdickt wird. Hierdurch wird erreicht oder sichergestellt, dass an dem Endbereich ausreichend Material zum Formen der nach außen oder innen ragenden Werkstückabschnitte verbleibt. Durch ein vorzugsweise axiales Anstauchen eines axialen Endbereiches des Werkstücks kann zusätzlich eine erhöhte Materialansammlung erzeugt werden.

Eine weitere bevorzugte Ausführungsvariante der Erfindung besteht darin, dass das radial nach außen verdrängte Material zu einem Ringflansch geformt wird und dass der Ringflansch durch Materialabtrag zu einem oder mehreren Befestigungslaschen gebildet wird. Durch das radiale nach außen Formen eines Ringflansches bleibt ein einteiliger Materialverbund bestehen. Durch das spannlose nach außen Verdrängen des Materials bleibt insbesondere die Gefügefaserstruktur bestehen, was insbesondere für eine hohe Dauerfestigkeit vorteilhaft ist. Grundsätzlich kann der gesamte Ringflansch als ein gesamtes Befestigungselement mit den Befestigungslaschen dienen. Für eine Gewichtseinsparung ist es nach einer Weiterbildung vorteilhaft, dass der Ringflansch durch Materialabtrag zu einer oder mehreren Befestigungslaschen gebildet wird. Der Materialabtrag kann dabei spanabhebend, etwa durch Fräsen, oder durch Stanzen, Schneidbrennen oder in einer sonstigen geeigneten Weise erfolgen. Es verbleiben dann nur Teilbereiche des Ringflansches als Stege, welche die Befestigungslaschen bilden. Bei dem Materialabtrag können auch die Durchbrüche in den Befestigungslaschen eingebracht werden.

Nach einer Weiterbildung der Erfindung ist es vorgesehen, dass an einer Innenseite des Werkstücks ein Ringabsatz gebildet wird, an welchem der radial verlaufende Boden angeordnet und befestigt wird. Der Boden kann dabei insgesamt durch ein spanloses Anformen gebildet werden. Ergänzend können auch materialabtragende Fertigungsverfahren eingesetzt werden, um etwa ein Lochbild in den Boden einzubringen.

Besonders vorteilhaft ist es nach einer Weiterbildung der Erfindung, dass der Endbereich des Werkstücks durch Zustellen mindestens einer Umformrolle umgeformt wird, wobei Material des Werkstücks radial nach außen und nach innen verdrängt wird, und dass das radial nach innen verdrängte Material zu dem Boden geformt wird. Hierdurch kann insbesondere ein im Wesentlichen einteiliges Gehäuse bestehend aus der Umfangswand, dem Boden und den radial nach außen vorstehenden Befestigungslaschen gebildet werden. Ein derartiges Gehäuse ist besonders stabil und weist eine hohe Langlebigkeit auf.

Weiterhin ist es nach einer Verfahrensvariante der Erfindung vorgesehen, dass der Boden durch Materialabtrag endbearbeitet ist. Dies kann durch Fräsen oder insbesondere durch Drehen erfolgen, wobei eine rotationssymmetrische Kontur des Bodens unterstützt wird.

Die Erfindung wird nachfolgend anhand von bevorzugten Ausführungsbeispielen weiter beschrieben, welche schematisch in den Zeichnungen dargestellt sind. In den Zeichnungen zeigen:
- Fig. 1: eine Teilquerschnittsansicht eines rohrförmigen Ausgangswerkstücks;
- Fig. 2: eine Teilquerschnittsansicht des Ausgangswerkstücks nach einem ersten Umformschritt;
- Fig. 3: eine Teilquerschnittsansicht des Werkstücks nach einem weiteren Umformschritt;
- Fig. 4: eine Teilquerschnittsansicht des Werkstücks nach einem weiteren Bearbeitungsschritt;
- Fig. 5: eine schematische geschnittene perspektivische Ansicht eines erfindungsgemäßen Gehäuses; und
- Fig. 6: eine perspektivische Ansicht eines erfindungsgemäßen Gehäuses.

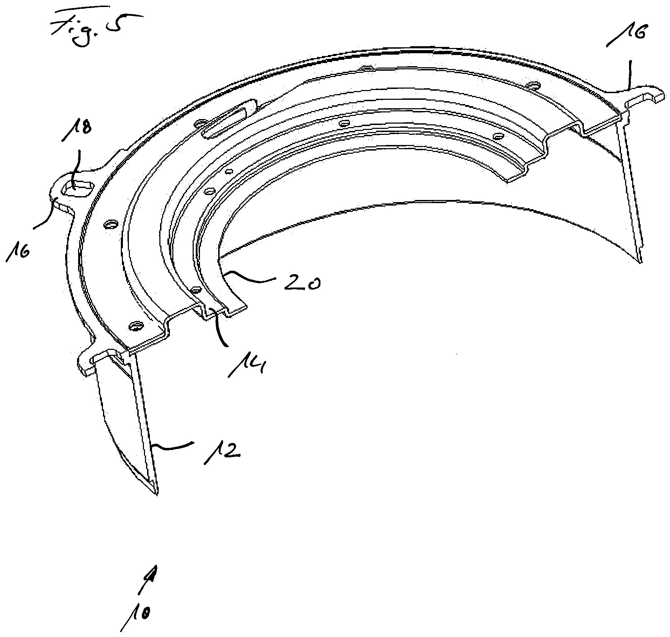

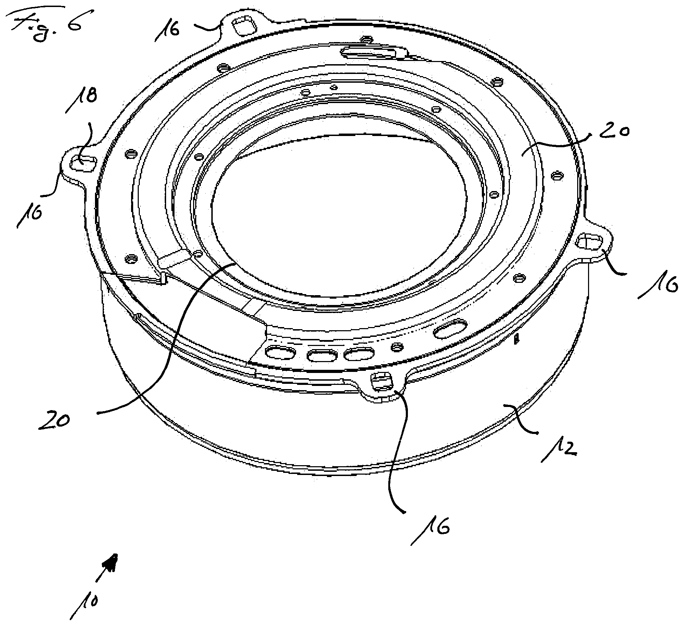

Ein erfindungsgemäßes Gehäuse 10, welches für einen Elektroantrieb vorgesehen ist, ist in den Figuren 5 und 6 dargestellt. Das Gehäuse 10 weist dabei eine trommelförmige Umfangswand 12 auf. An der Innenseite der trommelförmigen Umfangswand 12 kann ein Stator des Elektroantriebes angeordnet werden. An einem oberen Endbereich der Umfangswand 12 ist ein kreisringscheibenförmiger Boden 14 mit einer kreisförmigen Mittenöffnung 20 angebracht. Die Mittenöffnung 20 ist zum Durchtritt der Wellen eines Läufers des Elektroantriebs ausgebildet.

Der scheibenförmige Boden 14, welcher vorzugsweise als ein Tiefziehteil mit einer Konturierung gebildet ist, ragt radial nicht nach außen über die Umfangswand 12 vor. In einem radialen Außenbereich sind radial vorstehende Befestigungslaschen 16 mit Durchgangsöffnungen 18 ausgebildet. Die stegartigen Befestigungslaschen 16 können gleichmäßig um den Umfang verteilt oder an definierten Positionen angeordnet sein, um den Elektroantrieb an einem Grundträger oder einem sonstigen Bauteil zu befestigen. Gemäß der Erfindung sind die Befestigungslaschen 16 einstückig zumindest mit der trommelförmigen Umfangswand 12 ausgebildet.

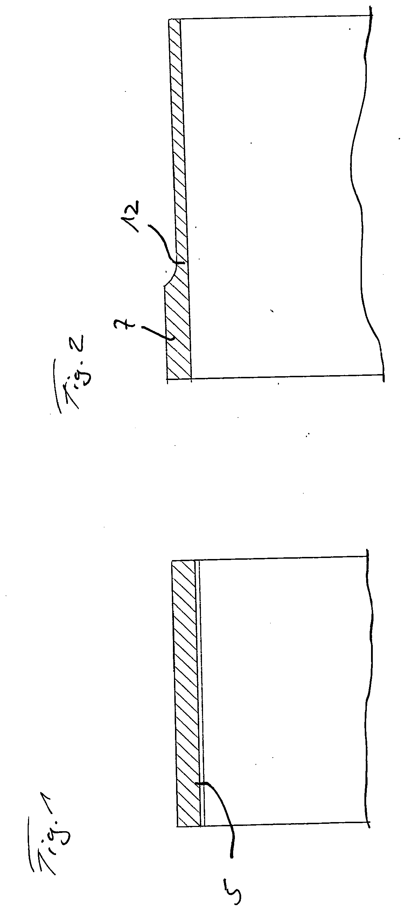

In den Figuren 1 bis 4 wird ein bevorzugtes Verfahren zur Herstellung einer Umfangswand 12 für ein erfindungsgemäßes Gehäuse 10 dargestellt.

Gemäß Fig. 1 dient als Ausgangsteil ein rohrförmiges Werkstück 5, welches axial kleiner und in der Wanddicke dicker als die zu formende Umfangswand 12 ausgebildet ist. Durch ein Abstreckdrückwalzen mittels Zustellen mindestens einer Abstreckdrückrolle an der Außenseite des Werkstücks 5 wird dieses bereichsweise in seiner Wanddicke verringert, wobei das Werkstück 5 gleichzeitig axial gelängt wird, wie anschaulich in Fig. 2 dargestellt ist. Dabei erfolgt das Abstrecken des Werkstücks 5 derart, dass an einem Endbereich 7 eine größere Wandstärke, vorzugsweise entsprechend der Ausgangswanddicke des Werkstücks 5 verbleibt.

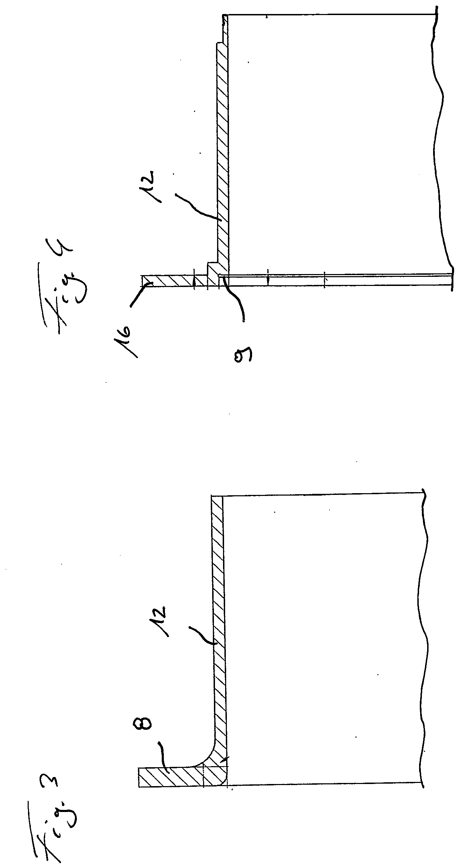

Der Endbereich 7 kann durch Zustellen einer oder mehrerer Drückrollen vorzugsweise axial zusätzlich angestaucht werden. Dies ist jedoch nicht in den Figuren dargestellt. In einem weiteren Verfahrensschritt gemäß Fig. 3 wird der dickere Endbereich 7 um 90° radial nach außen umgelegt. Dies erfolgt vorzugsweise über Zustellen mindestens einer Umformrolle oder an einer Tiefziehpresse. Aus dem dickeren Endbereich 7 wird so ein radial nach außen vorstehender Ringflansch 8 geformt. Dieser Ringflansch 8 kann durch weitere spanlose Umformung und/oder spanabhebendes Bearbeiten und/oder stanzendes oder schneidendes Bearbeiten zu den stegartigen Befestigungslaschen 16 geformt werden, wie sie in Fig. 5 dargestellt sind. Bei diesem Bearbeiten der Befestigungslaschen 16 kann eine Materialstärkenverringerung durchgeführt werden, wie Fig. 4 zu entnehmen ist. Dabei können auch die Durchgangsöffnungen 18 in die Befestigungslaschen 16 eingebracht werden.

Bei der abschließenden Bearbeitung der Umfangswand 12 kann an einer Innenseite im Bereich des Ringflansches 8 ein ringförmiger Absatz 9 eingeformt oder spanabhebend eingedreht werden. An diesem Absatz 9 kann positionsgenau der ringscheibenförmige Boden 14 positioniert und befestigt werden. Das Befestigen kann durch Einpressen, Verprägen, Verschweißen oder in einer sonstigen geeigneten Weise erfolgen. An einem vom Ringflansch 8 abgewandten Ende kann zudem eine spanabhebende Endbearbeitung der Umfangswand 12 erfolgen, wobei etwa ein Ringabsatz ausgebildet wird.

Alternativ kann der Boden 14 zusammen mit dem Ringflansch 8 einstückig aus dem Endbereich 7 des Ausgangswerkstücks 5 durch entsprechendes Zustellen einer oder mehrerer Umformrollen spanlos angeformt werden. In diesem Fall ist der Endbereich 7 entsprechend stärker zu dimensionieren, so dass ausreichend Material zur Verfügung steht, um dieses sowohl nach außen als auch radial nach innen zum Bilden des Ringflansches 8 beziehungsweise des Bodens 14 zu verdrängen.

## Patentansprüche

1. Verfahren zum Herstellen eines Gehäuses (10) für einen Elektroantrieb mit einer trommelförmigen Umfangswand (12) und einem radial verlaufenden Boden (14), wobei im Bereich des Bodens (14) radial nach außen vorstehende Befestigungslaschen (16) angeordnet sind,
ein rohrförmiges Werkstück (5) an einer Drückwalzmaschine eingespannt und in Rotation versetzt wird,
das rohrförmige Werkstück (5) durch Zustellen und axiales Überlaufen einer Umformrolle zumindest bereichsweise in der Wanddicke reduziert und dabei axial gelängt wird,
und ein Endbereich (7), an welchem die Befestigungslaschen (16) ausgebildet werden, in seiner Wanddicke unverändert bleibt oder die Wanddicke durch Anstauchen zusätzlich verdickt wird, und **dadurch gekennzeichnet:**
- **dass** an dem Endbereich (7) des rohrförmigen Werkstücks (5) mindestens eine Umformrolle axial zugestellt wird, wobei Material radial nach außen verdrängt wird, und
- **dass** aus dem verdrängten Material die Befestigungslaschen (16) gebildet werden.

2. Verfahren nach Anspruch 1,
**dadurch gekennzeichnet,**
**dass** das radial nach außen verdrängte Material zu einem Ringflansch (8) geformt wird und
**dass** der Ringflansch (8) durch Materialabtrag zu einem oder mehreren Befestigungslaschen (16) gebildet wird.

3. Verfahren nach einem der Ansprüche 1 oder 2,
**dadurch gekennzeichnet,**
**dass** an einer Innenseite des Werkstücks (5) ein Ringabsatz (9) gebildet wird, an welchem der radial verlaufende Boden (14) angeordnet und befestigt wird.

4. Verfahren nach einem der Ansprüche 1 bis 3,
**dadurch gekennzeichnet,**
**dass** der Endbereich (7) des Werkstücks (5) durch Zustellen mindestens einer Umformrolle umgeformt wird, wobei Material des Werkstücks radial nach außen und nach innen verdrängt wird, und
**dass** das radial nach innen verdrängte Material zu dem Boden (14) geformt wird.

5. Verfahren nach Anspruch 4,
**dadurch gekennzeichnet,**
**dass** der Boden (14) durch Materialabtrag endbearbeitet wird.

6. Gehäuse für einen Elektroantrieb, mit einer trommelförmigen Umfangswand (12) und einem radial verlaufenden Boden (14), wobei im Bereich des Bodens (14) radial nach außen vorstehende Befestigungslaschen (16) angeordnet sind, wobei die trommelförmige Umfangswand (12) und die radial nach außen vorstehenden Befestigungslaschen (16) einstückig aus einem rohrförmigen Werkstück (5) gebildet sind, wobei die Befestigungslaschen (16) spanlos durch Materialverdrängung aus dem Material des rohrförmigen Werkstücks (5) angeformt sind, und **dadurch gekennzeichnet, dass** das Gehäuse nach einem Verfahren nach einem der Ansprüche 1 bis 5 gebildet ist.

7. Gehäuse nach Anspruch 6,
**dadurch gekennzeichnet,**
**dass** der Boden (14) an der trommelförmigen Umfangswand (12) angebracht, insbesondere angeschweißt ist.

8. Gehäuse nach Anspruch 6,
**dadurch gekennzeichnet,**
**dass** der Boden (14) durch Materialverdrängung aus dem Material des rohrförmigen Werkstücks (5) angeformt ist.

9. Gehäuse nach einem der Ansprüche 6 bis 8,
**dadurch gekennzeichnet,**
**dass** der Boden (14) ringförmig mit einer Mittenöffnung (20) ausgebildet ist.

10. Gehäuse nach einem der Ansprüche 6 bis 9,
**dadurch gekennzeichnet,**
**dass** die Befestigungslaschen (16) jeweils mit mindestens einer Durchgangsöffnung (18) für Befestigungsmittel versehen sind.

11. Gehäuse nach einem der Ansprüche 6 bis 10,
**dadurch gekennzeichnet,**
**dass** die trommelförmige Umfangswand (12) aus dem rohrförmigen Werkstück (5) durch Abstreckdrückwalzen geformt ist, wobei das Material der Umfangswand (12) kaltverfestigt ist.

12. Elektroantrieb mit einem Gehäuse, in welchem ein Stator angeordnet und ein Läufer drehbar gelagert sind,
**dadurch gekennzeichnet,**
**dass** ein Gehäuse (10) nach einem der Ansprüche 6 bis 11 vorgesehen ist.

## Claims

1. Method for producing a housing (10) for an electric drive with a drum-shaped circumferential wall (12) and a radially running base (14),
wherein in the region of the base (14) radially outward-protruding fastening lugs (16) are arranged,
a tubular workpiece (5) is clamped on a flow forming machine and set into rotation, by feeding and axially passing a forming roller the tubular workpiece (5) is reduced at least in some regions in the wall thickness and in doing so is lengthened axially, and
an end region (7), on which the fastening lugs (16) are designed, remains unchanged in its wall thickness or the wall thickness is additionally thickened through upsetting, and
**characterized in that**
- on the end region (7) of the tubular workpiece (5) at least one forming roller is fed axially, wherein material is displaced radially outwards, and
- **in that** the fastening lugs (16) are shaped out of the displaced material.

2. Method according to claim 1,
**characterized in that**
the material displaced radially outwards is formed to an annular flange (8) and
**in that** through material removal the annular flange (8) is shaped into one or several fastening lugs (16).

3. Method according to any one of claims 1 or 2,
**characterized in that**
on an internal side of the workpiece (5) an annular step (9) is shaped, on which the radially running base (14) is arranged and fastened.

4. Method according to any one of claims 1 to 3,
**characterized in that**
the end region (7) of the workpiece (5) is formed by feeding at least one forming roller, wherein material of the workpiece is displaced radially outwards and inwards, and
**in that** the material displaced radially inwards is formed to the base (14).

5. Method according to claim 4,
**characterized in that**
the base (14) is finished through material removal.

6. Housing for an electric drive, with a drum-shaped circumferential wall (12) and a radially running base (14), wherein in the region of the base (14) radially outward-protruding fastening lugs (16) are arranged,
wherein the drum-shaped circumferential wall (12) and the radially outward-protruding fastening lugs (16) are shaped integrally out of a tubular workpiece (5), wherein the fastening lugs (16) are formed in a non-cutting manner from the material of the tubular workpiece (5) through material displacement, and
**characterized in that**
the housing is shaped pursuant to a method according to any one of claims 1 to 5.

7. Housing according to claim 6,
**characterized in that**
the base (14) is attached, in particular welded to the drum-shaped circumferential wall (12).

8. Housing according to claim 6,
**characterized in that**
the base (14) is formed from the material of the tubular workpiece (5) through material displacement.

9. Housing according to any one of claims 6 to 8,
**characterized in that**
the base (14) is of annular design with a center opening (20).

10. Housing according to any one of claims 6 to 9,
**characterized in that**
the fastening lugs (16) are each provided with at least one through opening (18) for fastening means.

11. Housing according to any one of claims 6 to 10,
**characterized in that**
the drum-shaped circumferential wall (12) is formed out of the tubular workpiece (5) through stretch-flow forming, wherein the material of the circumferential wall (12) is strain-hardened.

12. Electric drive with a housing, in which a stator is arranged and a rotor is supported in a rotatable manner,
**characterized in that**
a housing (10) according to any one of claims 6 to 11 is provided.

## Revendications

1. Procédé de fabrication d'un boîtier (10) pour un entraînement électrique avec une paroi périphérique (12) en forme de tambour et un fond (14) s'étendant radialement, dans lequel dans la zone du fond (14) sont agencées des languettes de fixation (16) dépassant radialement vers l'extérieur,
une pièce tubulaire (5) est serrée au niveau d'une machine de fluotournage et est amenée en rotation,
la pièce tubulaire (5) est réduite par avance et débordement axial d'un galet de formage au moins par endroits dans l'épaisseur de paroi et allongée axialement,
et une zone d'extrémité (7), au niveau de laquelle les languettes de fixation (16) sont réalisées, reste inchangée dans son épaisseur de paroi ou l'épaisseur de paroi est en outre épaissie par refoulement, et **caractérisé en ce que** :
- au moins un galet de formage est avancé axialement au niveau de la zone d'extrémité (7) de la pièce tubulaire (5), dans lequel du matériau est déplacé radialement vers l'extérieur, et
- **en ce que** les languettes de fixation (16) sont formées à partir du matériau déplacé.

2. Procédé selon la revendication 1,
**caractérisé en ce que**
le matériau déplacé radialement vers l'extérieur est formé en une bride annulaire (8) et
**en ce que** la bride annulaire (8) est formée par enlèvement de matériau en une ou plusieurs languettes de fixation (16).

3. Procédé selon l'une des revendications 1 ou 2,
**caractérisé en ce**
**qu'**un épaulement annulaire (9) est formé au niveau d'un côté intérieur de la pièce (5), au niveau duquel le fond s'étendant radialement (14) est agencé et fixé.

4. Procédé selon l'une des revendications 1 à 3,
**caractérisé en ce**
**que** la zone d'extrémité (7) de la pièce (5) est formée par avance au moins d'un galet de formage, dans lequel du matériau de la pièce est déplacé radialement vers l'extérieur et vers l'intérieur, et
**que** le matériau déplacé radialement vers l'intérieur est formé en le fond (14).

5. Procédé selon la revendication 4,
**caractérisé en ce**
**que** le fond (14) est usiné par finition par enlèvement de matériau.

6. Boîtier pour un entraînement électrique, avec une paroi périphérique (12) en forme de tambour et un fond (14) s'étendant radialement, dans lequel des languettes de fixation (16) dépassant radialement vers l'extérieur sont agencées dans la zone du fond (14),
dans lequel la paroi périphérique (12) en forme de tambour et les languettes de fixation (16) dépassant radialement vers l'extérieur sont formées d'un seul tenant à partir d'une pièce (5) tubulaire, dans lequel les languettes de fixation (16) sont formées sans enlèvement de copeau par déplacement de matériau du matériau de la pièce (5) tubulaire, et **caractérisé en ce que** le boîtier est formé selon un procédé selon l'une des revendications 1 à 5.

7. Boîtier selon la revendication 6,
**caractérisé en ce**
**que** le fond (14) est monté, en particulier est soudé au niveau de la paroi périphérique (12) en forme de tambour.

8. Boîtier selon la revendication 6,
**caractérisé en ce**
**que** le fond (14) est formé par déplacement de matériau du matériau de la pièce tubulaire (5).

9. Boîtier selon l'une des revendications 6 à 8,
**caractérisé en ce**
**que** le fond (14) est réalisé en forme d'anneau avec une ouverture médiane (20).

10. Boîtier selon l'une des revendications 6 à 9,
**caractérisé en ce**
**que** les languettes de fixation (16) sont pourvues respectivement d'au moins une ouverture débouchante (18) pour des moyens de fixation.

11. Boîtier selon l'une des revendications 6 à 10,
**caractérisé en ce**
**que** la paroi périphérique (12) en forme de tambour est formée à partir de la pièce (5) tubulaire par fluotournage, dans lequel le matériau de la paroi périphérique (12) est écroui.

12. Entraînement électrique avec un boîtier, dans lequel un stator est agencé et un rotor est logé de manière à pouvoir tourner,
**caractérisé en ce**
**qu'**un boîtier (10) selon l'une des revendications 6 à 11 est prévu.
